# EUROPEAN PATENT SPECIFICATION

(11) **EP 0 771 318 B1**
(45) Date of publication and mention of the grant of the patent: **07.07.1999**
(21) Application number: 95908960.8
(22) Date of filing: 16.02.1995
(51) Int. Cl.: C05F 3/00, C05F 17/00

(54) **METHOD FOR TREATMENT OF MUNICIPAL WASTE SLUDGE OR ANIMAL SLURRY**
VERFAHREN ZUR BEHANDLUNG VON KOMMUNALEN ABWASSERSCHLAMM ODER JAUCHE
PROCEDE DE RETRAITEMENT DES BOUES EXCEDENTAIRES D'ORIGINE DOMESTIQUE ET DES DEJECTIONS ANIMALES

(30) Priority: 16.02.1994 FI 940714
(43) Date of publication of application: 07.05.1997
(73) Proprietor: BCDE Group Waste Management Ltd Oy, 00370 Helsinki (FI)
(72) Inventor: SUOMINEN, Hannu, FIN-00690 Helsinki (FI)
(74) Representative: Ollikainen, Rauno Johannes
(86) International application number: FI9500076
(87) International publication number: WO9522513

(56) References cited:
- EP-A- 0 235 637
- EP-A- 0 384 329
- DE-A- 2 900 930
- US-A- 2 994 592

## Description

The present invention relates to a method for the treatment of municipal waste sludge or animal slurry for producing environmentally non-burdening end products. In the method, the waste sludge having a solids content typically within the range of 0,05 - 10 % or the animal slurry having a solids content more than 3 %, typically about 7 - 8 %, is delivered to a solids separator in which some of the solids is separated and fed into a composter.

The environmentally burdening effect of waste sludge has been found significant and thus far there is no method available for such treatment of waste sludge that would result in environmentally harmless end products. The same applies also to those municipal waste sludges (e.g. sludges from septic tanks) having a rather high solids content.

It is prior known to carry out the treatment of animal slurry by using electrolytic flotation for separating phosphor and nitrogen compounds as well as for reducing the amount of the eggs of bacteria and intestinal parasites. This is one way of mitigating the environmentally burdening effect of animal slurry but the remaining sludge is nevertheless still a major burden on the environment.

The publication DE-30 15 246 discloses a method for such treatment of municipal waste sludge that the solids content of waste sludge is increased with waste paper and, after mixing, expansion and flotation of the mass,the solids are separated and composted. Heavy metals are removed from the sludge electrolytically. The remaining sludge is still an ecological burden. Neither is the treatment of solids very effective since the composting is preceded by digestion or rotting.

An object of the invention is to provide a treating method for municipal waste sludge or animal slurry, capable of converting the waste sludge or animal slurry thoroughly, both in terms of solids and liquid, into ecologically harmless end products in such a manner that the end products obtained from the sludge include composted solid material and pure water solution, said solid material being useful as a soil conditioner and a protein feed and said water solution having a sufficiently high standard of purity for draining it directly into the environment or for using it as drinking water for livestock.

This object is achieved on the basis of the features set forth in the appended claim 1. The non-independent claims disclose preferred embodiments of the invention for improving the standard of purity for the end products.

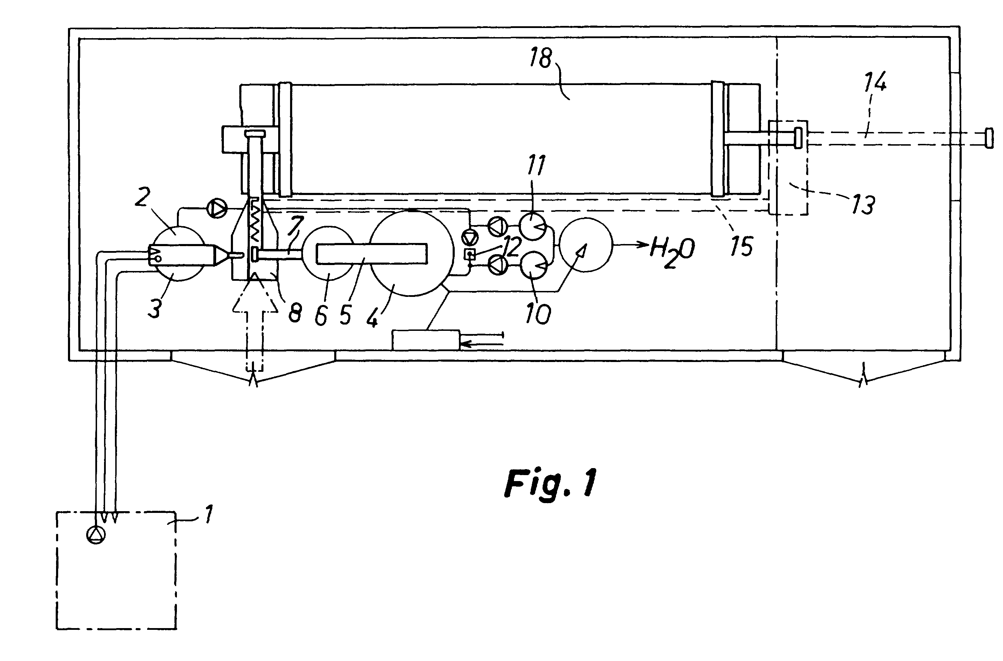

The invention will now be described in more detail by means of a working example with reference made to the accompanying drawings, in which
- fig. 1: is a schematic plan view of an apparatus used for carrying out a method of the invention and

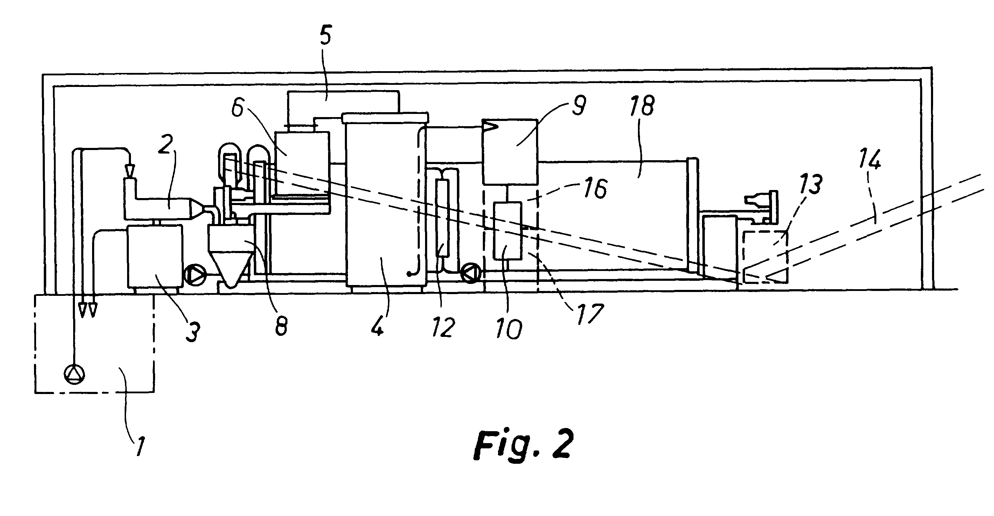

- fig. 2: is a side view of the same apparatus.

The example described hereinbelow relates to a method for the treatment of animal slurry, e.g. hog farm slurry, but, naturally, the equivalent method can also be used for the purification of municipal waste sludges in the form of a solution or a suspension.

The animal slurry contained in a silo 1 has a solids content which is typically 7 - 8 %. Naturally, the content may vary but it is normally more than 3 %. In practice, this type of animal slurry is in the form of a thick mud-like gruel. The slurry is pumped into a solids separator 2 which operates e.g. on a pressure screw principle. In the separator 2, 35 - 50 % of the solid slurry material is removed and the separated solids are delivered into a mixer 8 and thence by means of a mixing and feed screw to the inlet end of a drum composter 18. The remaining animal slurry suspension, having a solids content of e.g. 5 %, is pumped from a tank 3 through an electrolytic cell 12 to a flock separator 4. The electrolytic cell 12 is provided with iron electrodes for carrying the slurry therebetween. If necessary, a tank 11 is used for delivering a conductance solution, e.g. a saline, a sodium chloride (NaCl) and/or an acidic ferri-sulphate solution Fe2(SO4)₃ into the slurry upstream of the electrolytic cell 12. The pumping of slurry and additives is preferably effected by means of sleeve pumps for accurately controlling the amounts and mutual proportions of a slurry flowing through the cell and a conductance solution added therein.

The cell 12 typically produces ferri-hydroxide Fe(OH)₃ and hydrogen gas H2↑. The ferri-hydroxide precipitates into a mesh-like molecular sieve for trapping solids particles and hydrogen bubbles. Thus, the flock separator 4 develops upwardly rising solids flock and the purified water is retained in the bottom end of the flock separator 4. The flock separator 4 can be a rather tall container or also a pipe which is long relative to its diameter, as set forth in the Applicant's Patent application FI-932288.

The flock separation can be further enhanced by a polymer addition received from a tank 10 and thus delivered into a pipe between the cell 12 and the separating tank 4. This polymer addition serves as a flocculant producing sort of "rubber bands" which accumulate ferri-hydroxide precipitate in the flock separator 4. Thus, the flock develops into rather large blocks which are carried from the top end of the flock separator 4 by means of a conveyor and a flock compactor 5 into a flock container 6. From the container 6 the flock is delivered by means of a measuring and feed screw 7 to the mixer 8 for mixing it with a solid material received from the solids separator 2 in view of carrying it into the composter 18. The mass to be delivered must be so dry that no water can be squeezed out of it by hand. However, the produced mass is too compact in view of composting. The mass can be fluffed by adding e.g. chips into the mixer 8.

The rotating speed and/or rotating direction of the drum composter 8 and feeding and mixing blades fitted inside the composter can be used for bring the mass advancing rate and mixing efficiency in balance for optimal composting conditions. Thus, the composting mass has a temperature of 50 - 80°C, as set forth in the Applicant's Patent application FI-925276.

A screen 13 fitted at the outlet end of the composter 18 is used for separating coarse particles, such as chips, which are returned to the inlet end of the composter and mixed with a mass to be composted for fluffing the same. Thus, the required amount of chips to be delivered to the mixer 8 from outside the process can be substantially reduced.

From the flock separator 4 the purified water is carried into a container 9 for removing it therefrom directly to the environment. The treated water can be further processed and purified into household water or drinking water for livestock. In this case, the water is delivered from the container 9 through a sand filter 16 and/or a carbon filter 17.

## Claims

1. A method for the treatment of municipal waste sludge or animal slurry for producing environmentally non-burdening end products, in which method the waste sludge is delivered to a solids separator (2) for separating some of the solids and feeding the same into a composter (18), **characterized** in that the sludge remaining after said solids separation is pumped to flow through an electrolytic cell (12) into a separate flock separator (4), which is a tall container or a pipe which is long relative to its diameter and wherein the flock is separated by ferri-hydroxide and hydrogen gas produced in said cell (12), the separated flock being carried together with said separated solids component into a drum composter (18) wherein there are feeding and mixing blades which are used to bring the mass advancing rate and mixing efficiency in balance for optimal composting conditions.

2. A method as set forth in claim 1, **characterized** in that the treated water received from the flock separator (4) is further delivered through a sand and/or carbon filter.

3. A method as set forth in claim 1, **characterized** in that the sludge or slurry advancing from the electrolytic cell (12) to the flock separator (4) is supplemented by the addition of a polymer as a flocculant for binding the ferri-hydroxide precipitate produced in the cell (12) into sizable blocks.

4. A method as set forth in claim 1, **characterized** in that the solids component separated by means of the solids separator (2) and the flock separated in the flock separator (4) are mixed and the mixed mass is delivered into the drum composter (18) having its outlet end provided with a screen (13) for separating the composted mass from coarse particles, such as chips, which are carried by a return conveyor (15) back to the composter inlet end mixed with a mass to be composted for fluffing the same.

## Patentansprüche

1. Verfahren zur Behandlung von öffentlichem Abfallschlamm oder Tierschlamm zur Herstellung von die Umwelt nicht belastenden Endprodukten, bei dem Abfallschlamm zu einem Feststoffseparator (2) geliefert wird, der einige Feststoffe separiert, die in eine Kompostiervorrichtung (18) geschickt werden, dadurch gekennzeichnet, daß der Schlamm nach der Abtrennung der Feststoffe durch eine elektrolytische Zelle (12) in einen getrennten Flockenseparator (4) gepumpt wird, der einen großen Behälter oder ein Rohr enthält, das im Verhältnis zu seinem Durchmesser lang ist und worin die Flocken durch ein Eisenhydroxid oder durch ein Wasserstoffgas, das in der Zelle (12) erzeugt wird, separiert werden, wobei die getrennten Flocken zusammen mit der separierten Feststoffkomponente in eine Trommelkompostiervorrichtung (18) eingetragen werden, worin sich Vorschub- und Mischblätter befinden, welche dazu verwendet werden, den Vorschub der Masse und die Mischungseffektivität in Gleichgewicht zu bringen zur Erzielung optimaler Kompostierbedingungen.

2. Verfahren nach Anspruch 1, dadurch gekennzeichnet, daß das Wasser, das aus dem Flockenseparator (4) erhalten wird, durch ein Sand- und/oder ein Kohlefilter geleitet wird.

3. Verfahren nach Anspruch 1, dadurch gekennzeichnet, daß der Brühe oder dem Schlamm, der sich von der elektrolytischen Zelle (12) zum Flockenseparator (4) bewegt, ein Polymer als Flockungsmittel zugesetzt wird zur Bindung der Eisenhydroxidausfällung aus der Zelle (12) in angemessene Blöcke.

4. Verfahren nach Anspruch 1, dadurch gekennzeichnet, daß die Feststoffkomponente, die durch den Feststoffseparator (2) abgetrennt wird und die Flocken, die durch den Flockenseparator (4) abgetrennt werden, gemischt werden und daß die vermischte Masse zu einer Trommelkompostiervorrichtung (18) gefördert wird, deren Auslaßende mit einem Gitter (13) versehen ist zur Trennung der kompostierten Masse von Grobpartikeln, wie z. B. Spänen, die über einen Rückförderer (15) zurück zum Einlaß der Kompostiervorrichtung gefördert und mit der zu kompostierenden Masse gemischt werden zur Flockierung derselben.

## Revendications

1. Procédé pour le traitement de boues résiduaires d'origine domestique ou de déjections animales pour obtenir des produits finals qui ne représentent pas une charge puor l'environnement, procédé dans lequel on achemine les boues résiduaires à un séparateur de produits solides (2) pour séparer une certaine quantité des produits solides et pour les alimenter dans un composteur (18), caractérisé en ce qu'on fait passer par pompage les boues subsistant après ladite séparation des produits solides à travers une cellule électrolytique (12) pour les introduire dans un séparateur par floculation séparé (4) qui est constitué d'un récipient de grande dimension ou d'un conduit dont la longueur est supérieure au diamètre et dans lequel les flocons sont séparés par de l'hydroxyde ferrique et de l'hydrogène gazeux généré dans ladite cellule (12), les flocons séparés étant transportés de manière conjointe avec ledit composant de produits solides séparé dans un composteur à tambour (18) dans lequel sont montées des lames d'alimentation et de mélange que l'on utilise pour amener la vitesse d'avance de la masse et le rendement de mélange en équilibre dans le but d'obtenir des conditions de compostage optimales.

2. Procédé selon la revendication 1, caractérisé en ce que les eaux traitées provenant du séparateur par floculation (4) sont acheminées par la suite à travers un filtre à sable et/ou un filtre de carbone.

3. Procédé selon la revendication 1, caractérisé en ce qu'on ajoute aux boues ou aux déjections qui progressent depuis la cellule électrolytique en direction du séparateur par floculation (4), un polymère à titre d'agent de floculation pour lier le précipité d'hydroxyde ferrique généré dans la cellule (12) pour obtenir des blocs qui peuvent être saisis.

4. Procédé selon la revendication 1, caractérisé en ce que le composant de produits solides séparé à l'aide du séparateur de produits solides (2) et les flocons séparés dans le séparateur par floculation (4) sont mélangés, et la masse mélangée est acheminée dans le composteur à tambour (18) dont l'extrémité de sortie est munie d'un tamis (13) pour séparer la masse soumise à un compostage des grosses particules telles que des copeaux de bois qui sont renvoyées via un transporteur de retour (15) à l'extrémité d'entrée du composteur et mélangées avec une masse destinée au compostage, pour la soumettre à un peluchage.
